Europäisches Patentamt

European Patent Office

Office européen des brevets

(19)

(11) Veröffentlichungsnummer: **0 016 137**
**B1**

## (12) EUROPÄISCHE PATENTSCHRIFT

(45) Veröffentlichungstag der Patentschrift:
07.09.83

(51) Int. Cl.³: **G 02 B 23/18**

(21) Anmeldenummer: **79900854.5**

(22) Anmeldetag: **12.07.79**

(86) Internationale Anmeldenummer:
**PCT/DE 79/00071**

(87) Internationale Veröffentlichungsnummer:
**WO 80/00377 (06.03.80** Gazette 80/5)

(54) **PRISMENFERNROHR MIT BILDSTABILISIERUNG.**

(30) Priorität: **04.08.78 DE 2834158**

(43) Veröffentlichungstag der Anmeldung:
**01.10.80 Patentblatt 80/20**

(45) Bekanntmachung des Hinweises auf die Patenterteilung:
**07.09.83 Patentblatt 83/36**

(84) Benannte Vertragsstaaten:
**AT CH FR GB**

(56) Entgegenhaltungen:
**DE-A-318 227**
**DE-A-2 414 061**
**DE-A-2 419 532**
**US-A-2 829 557**

(73) Patentinhaber: **Firma Carl Zeiss, Postfach 1369/1380,
D-7082 Oberkochen (DE)**

(72) Erfinder: **WEYRAUCH, Adolf, Hegelstrasse 132,
D-7080 Aalen (DE)**

Prismenfernrohr mit Bildstabilisierung

Die Erfindung betrifft ein Fernrohr mit kardanisch gelagertem Umkehrprismensystem, wobei der Lagerdrehpunkt von der Objektiv- und Okularebene gleichen Abstand hat.

Die optische Leistungsfähigkeit von Fernrohren wird durch Vibrationen, die während der Benutzung des Fernrohres auftreten, stark beeinträchtigt. Die Beeinträchtigung macht sich umso stärker bemerkbar, je höher die Vergrößerung des Fernrohres ist und führt zum Zittern des Bildes in der Bildebene des Fernrohres.

In der DE-C-318 227 wird eine Vorrichtung zum Ausgleich von Erschütterungen von Ferngläsern beschrieben, bei dem ein optisches System bei schnellen Drehbewegungen des Gehäuses Relativbewegungen zu den anderen optischen Systemen ausführt. Diese Schrift enthält einen Hinweis, daß mit der beschriebenen Vorrichtung auch zwei Fernrohre zu einem binokularen Fernrohr verbunden sein können, bei dem die Drehpunkte der Lager für die Umkehrprismensysteme die beiden Normalen zu den nicht zusammenfallenden optischen Achsen halbieren und bei dem die beiden Umkehrprismensysteme über ihre Träger verbunden sind. Nachteilig bei diesen Fernrohren ist, daß sie einen erheblichen mechanischen Aufwand erfordern und in binokularer Ausführung sehr voluminös sind.

In der DE-A-2 419 532 wird eine Bild-Stabilisierungsvorrichtung offenbart, bei der ein Bildumkehrprisma kardanisch so gelagert ist, daß der Drehpunkt von der Objektivhauptebene und der Okularhauptebene gleichen Abstand hat.

Das gleiche trifft zu für das in der DE-B-2 353 101 beschriebene Fernrohr mit Bildstabilisierung. Bei diesen Fernrohren mit Bildstabilisierung ist es aus räumlichen Gründen nicht möglich, das Fernrohr in einer gebrauchsgünstigen Gestaltung binokular auszuführen.

Der Erfindung liegt die Aufgabe zugrunde, eine räumliche Anordnung für die Lagerung des Umkehrprismensystems eines Fernrohres anzugeben, die es gestattet, mit geringem Aufwand auch bei einem binokularen Fernrohr eine Bildstabilisierung zu erreichen.

Diese Aufgabe wird erfindungsgemäß dadurch gelöst, daß die Umkehrprismensysteme zweier zu einem binokularen Gerät verbundener Fernrohre an je einem Schenkel eines symmetrisch gegabelten Doppelträgers befestigt sind, der kardanisch um zwei Achsen schwenkbar an einem gehäusefesten, unbeweglichen Träger gelagert ist.

Vorteilhafterweise sind für den beweglichen Doppelträger Mittel zur Ausübung einer Rückstellkraft und ein Gegengewicht zur Gleichgewichtseinstellung vorgesehen.

Zur Einstellung des Augenabstandes des Benutzers können vor den Okularen angeordnete, drehbare rhombische Prismensysteme vorgesehen sein.

Die mit der Erfindung erzielten Vorteile bestehen insbesondere darin, daß mit einem vertretbaren Kostenaufwand und mit annehmbarer räumlicher Ausdehnung ein binokulares Fernrohr mit Bildstabilisierung gebaut werden kann. Das Doppelfernrohr ist leicht ausführbar, da es für das Trägersystem nur ein kardanisches Lager erfordert.

Ein Ausführungsbeispiel der Erfindung ist in der Zeichnung dargestellt und wird im folgenden näher beschrieben. Es zeigt

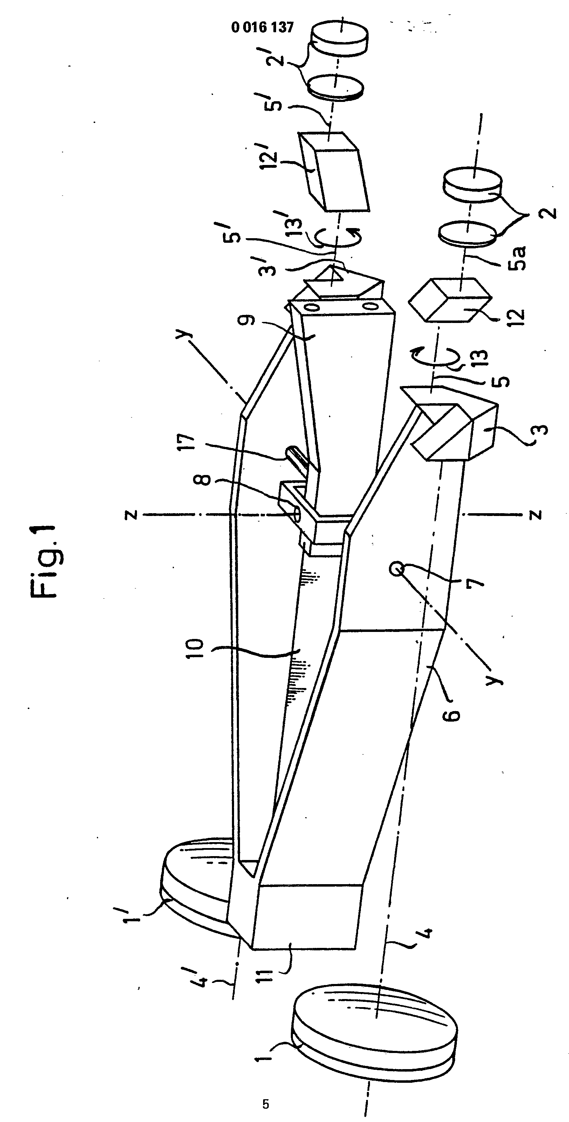

Fig. 1 ein Ausführungsbeispiel des erfindungsgemäßen binokularen Fernrohres in perspektivischer Darstellung.

Mit 1, 1' sind die Objektive, mit 2, 2' die Okulare und 3, 3' die Umkehrprismensysteme des dargestellten binokularen Fernrohres bezeichnet. Die durch die Objektive definierten optischen Achsen tragen die Bezeichnung 4, 4' und die durch die Umkehrprismensysteme 3, 3' definierten optischen Achsen die Bezeichnung 5, 5'. Die durch die Okulare definierten Achsen tragen die Bezeichnung 5a, 5a'.

Der Prismenträger 6 ist beweglich und in zwei Richtungen drehbar gelagert; seine Lagerstellen 7 und 8 und die Achse 17 sind in der Abbildung sichtbar. Mit 9 ist ein gehäusefester, unbeweglicher Träger bezeichnet. Die Befestigung des Trägers 9 am Gehäuse ist in der Darstellung nicht gezeichnet. Sie kann beispielsweise über eine Schraubverbindung erfolgen. In Richtung der Y- und Z-Achse ist der Prismenträger 6 vom Fernrohrgehäuse entkoppelt. Da er in diesen Richtungen drehbar gelagert ist, kann er räumlich fest in bezug auf eine bestimmte Ausrichtung stehen bleiben, wenn das Fernrohr sich um die Y- oder Z-Achse infolge einer Vibration bewegt. Die Rückstellfeder 10 bewirkt die rasche Kompensation der infolge Vibration des Fernrohrs erfolgten Auslenkung des Trägers 6. Eine genaue Gleichgewichtseinstellung des Trägersystems ist durch das Gegengewicht 11 möglich. Die rhombischen Prismen 12, 12' sind zur Einstellung der Pupillendistanz des Benutzers durch Änderung des Okularabstandes in Richtung 13, 13' drehbar.

Das gezeigte Ausführungsbeispiel der Erfindung weist eine einfache mechanische Lösung der Bildstabilisierung bei binokularen Fernrohren auf, die nur eine, beiden Umkehrprismensystemen gemeinsame, Lagerstelle erfordert. Allerdings läßt diese Ausführungsform Stabilisierungsfehler höherer Ordnung zu, die jedoch für den normalen Gebrauch vernachlässigt werden können. Die Richwirkung wird durch eine Blattfeder und die Dämpfung der Bewegung durch ein in Luft gedämpftes Gegengewicht ausgeübt. Für die Lösung der Aufgabe ist es auch möglich, andere aus dem Stand der Technik bekannte Mittel für die Richtwirkung und die Dämpfung zu verwenden. So können beispielsweise zur Richtwirkung Schrauben- oder Spiralfedern, oder ein Regelkreis mit

Stellungsindikatoren und einem elektromagnetischen Stellglied verwendet werden und zur Dämpfung der Bewegung viskose Flüssigkeiten oder eine Wirbelstromanordnung.

## Patentansprüche

1. Fernrohr mit kardanisch gelagertem Umkehrprismensystem, wobei der Lagerdrehpunkt von der Objektiv- und Okularebene gleichen Abstand hat, dadurch gekennzeichnet, daß zwei Fernrohre zu einem binokularen Gerät verbunden sind, wobei die Umkehrprismensysteme (3, 3') beider Fernrohre an je einem Schenkel eines symmetrisch gegabelten Doppelträgers (6) befestigt sind, der kardanisch um zwei Achsen schwenkbar an einem gehäusefesten, unbeweglichen Träger (9) gelagert ist.

2. Fernrohr nach Anspruch 1, dadurch gekennzeichnet, daß für den beweglichen Doppelträger (6) Mittel zur Ausübung einer Rückstellkraft und ein Gegengewicht zur Gleichgewichtseinstellung vorgesehen sind.

3. Prismenfernrohr nach Anspruch 1, dadurch gekennzeichnet, daß zur Einstellung des Augenabstandes des Benutzers vor den Okularen (2, 2') angeordnete, drehbare rhombische Prismensysteme (12, 12') vorgesehen sind.

## Claims

1. Telescope with an erecting prism system in a gimbal mount, with the pivot-point being equidistant from the objective and eyepiece planes, charaterized in that two telescopes are combined to form a binocular unit, that the erecting prism systems (3, 3') of the two telescopes are each mounted on one leg of a symmetrically forked twin carrier (6) which is supported by a rigid carrier (9) attached permanently to the housing and can be tilted around two axes in a gimbal mount.

2. Telescope according to claim 1, characterized in that means for exerting a restoring force and a counterweight for balancing are provided for the movable twin carrier (6).

3. Prism telescope according to claim 1, characterized in that rotatable rhombic prism systems (12, 12') are provided in front of the eyepieces (2, 2') for adjusting the interpupillary distance of the user.

## Revendications

1. Lunette possédant un système de prismes redresseurs montés selon une articulation à la cardan, le centre de rotation de l'articulation étant à égale distance du plan objectif et du plan oculaire, caractérisée en ce que deux lunettes sont assemblées pour donner un instrument binoculaire, les systèmes de prismes redresseurs (3, 3') des deux lunettes étant chacun fixé à une branche d'un double support symétrique (6), en forme de fourche, lequel est relié par une articulation à la cardan, de façon à pouvoir pivoter autour de deux axes, à un support fixe (9), solidaire du boîtier.

2. Lunette selon la revendication 1, caractérisée en ce qu'il est prévu pour le double support mobile (6) un moyen permettant d'exercer une force de rappel, et un contrepoids destiné au réglage de l'équilibre.

3. Lunette à prismes selon la revendication 1, caractérisée en ce qu'il est prévu pour régler l'écartement des yeux de l'utilisateur, des systèmes de prismes rhomboïdaux (12, 12'), tournants, disposés devant les oculaires (2, 2').

Fig.1